Europäisches Patentamt

(19) European Patent Office

Office européen des brevets

(11) Publication number : **0 163 644**
**B1**

# (12) EUROPEAN PATENT SPECIFICATION

(45) Date of publication of patent specification :
09.09.87

(21) Application number : 84900557.4

(22) Date of filing : 19.01.84

(86) International application number :
PCT/SE 84/00016

(87) International publication number :
WO/8402971 (02.08.84 Gazette 84/18)

(51) Int. Cl.⁴ : **F 24 H  3/08, F 24 D  5/02**

(54) A HEATING OR COOLING DEVICE ARRANGED BELOW THE CEILING.

(30) Priority : 20.01.83 SE 8300272

(43) Date of publication of application :
11.12.85 Bulletin 85/50

(45) Publication of the grant of the patent :
09.09.87 Bulletin 87/37

(84) Designated contracting states :
AT BE CH DE FR GB LI NL SE

(56) References cited :
DE-A-  460 538
DE-A-  893 855
FR-A- 1 553 142
US-A- 1 410 706
US-A- 2 466 851

(73) Proprietor : FAREX KLIMATSYSTEM AB
Fristadstorget 1
S-632 20 Eskilstuna (SE)

(72) Inventor : BERNTSSON, Thore
Kungsviken 6071
S-440 90 Henan (SE)

(74) Representative : Roth, Ernst Adolf Michael et al
GÖTEBORGS PATENTBYRA AB Box 5005
S-402 21 Göteborg (SE)

## Description

The present invention refers to a heating- or cooling device of the kind comprising a long box-shaped element of a heat conducting material and which is intended to be suspended from a ceiling of a room and a heating — and/or cooling element, e. g. one or more conduits for a heating — and/or cooling agent, and which extends through said box-shaped element in a heat conducting contact with this and where an inlet for intake air to the room is arranged at one end of the box-shaped member and at its opposite end there is arranged an outlet for the air, which thus is forced to pass through said element for being heated or cooled.

Background of the invention

Such heating and cooling devices are suspended to the ceiling as baffles under the joists for giving off heat to or absorb heat from the room substantially through radiation. They usually comprise light metal profiles connected to each other and provided with contact members shaped after the circumference of the conduits.

In the US patent specification 1 410 706 is disclosed a floor heating device which also heats the recirculated air to the room.

In the German patent specification 893 855 is shown a ceiling heating device comprising a panel in the form of the perforated metal plate which is in heat conducting contact with conduits for a heating agent, at which air can be blown in the above metal plate, where it is heated before it is distributed in the room by way of openings in the metal plate.

In the Swedish patent specification 104 408 is shown a heating device where air is heated by being blown past radiators.

In the US patent specification 2 466 851 there is disclosed an air flow control means comprising an air supply conduit and a heating — or cooling unit therein. However there is no heat — conducting contact between the heating — or cooling unit and the air supply conduit. A deflector is arranged at the outlet of the conduit to direct the air flow therefrom in a desired direction.

The object of the invention and its most important features

The object of the invention is to by simple means utilize heating and cooling devices of the kind mentioned above for heating and cooling respectively the intake air through the room in question in a very effective way. This has been achieved by the fact that at the outlet end of said element at some distance therefrom there is arranged a cover with somewhat larger dimension than the outer dimension of the element and the side edges thereof overlapping the end portion of the element, said cover forcing the air leaving the element to turn back substantially 180° and stroke along the outside of the element for further heating or cooling before it is distributed in the room.

Description of the drawings

The invention will now be further described with reference to an embodiment shown in the accompanying drawings.

Figure 1 shows schematically a section through a room provided with a heating and cooling device according to the invention.

Figure 2 shows on a larger scale the outlet portion in figure 1.

Figure 3 shows in perspective and partly broken a device according to the invention.

Figure 4 is a section according to the line IV-IV in fig. 3.

Figure 5 shown in perspective and partly broken a second embodiment of the invention.

Figure 6 shows a section through the device according to figure 5, and

Figure 7 shows a section through a room provided with a device according to figure 5 and 6.

Description of embodiment

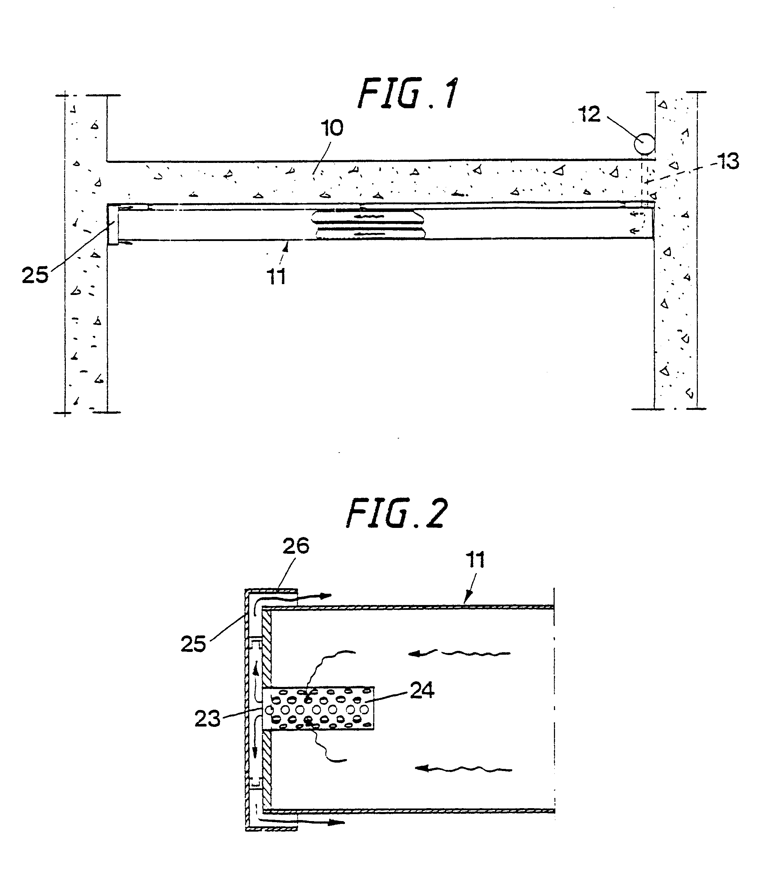

In Fig. 1 is shown a room in which a box-shaped baffle 11 composed by light metal profiles has been applied under the joists 10. Above the joists there is shown an intake air conduit 12 for fresh air to the room. From the intake air conduit 12 there is a connection pipe 13 to one end of the baffle.

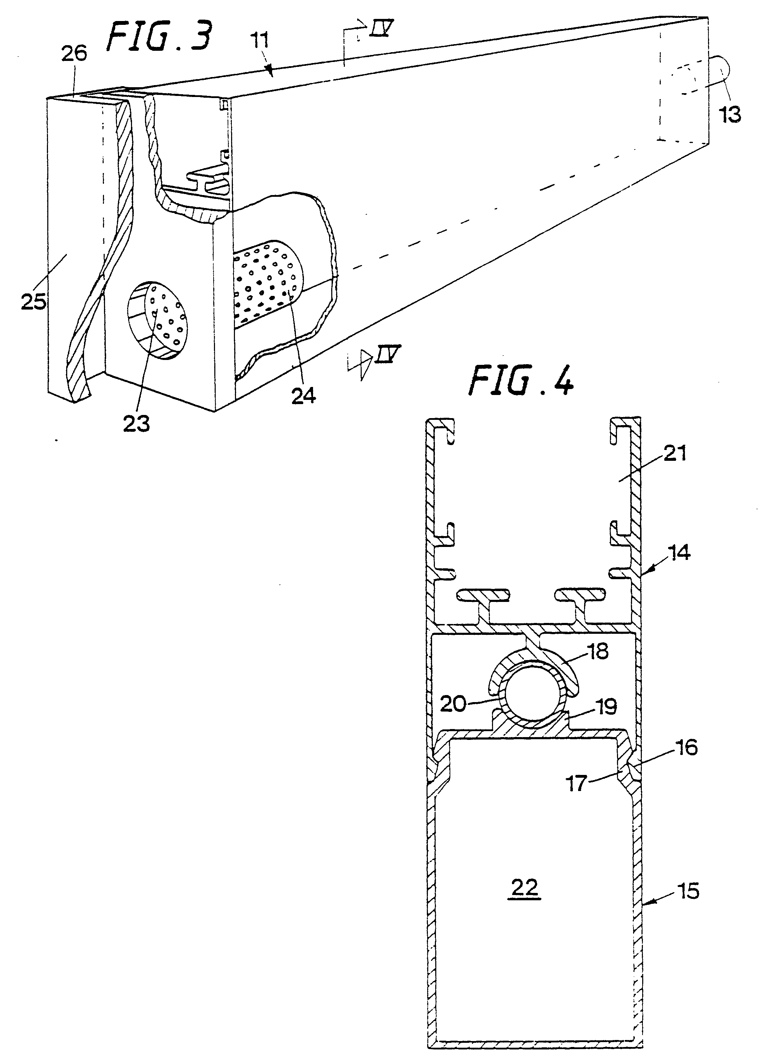

In Fig. 4 is shown a cross-section through a baffle 11, from which can be seen that this is composed by a pair of metal profiles 14 and 15, the upper profile 14 of which is provided with hook-shaped shoulders 16 intended to snap into corresponding recesses 17 in the second lower profile 15. The profiles further are provided with contact members 18 and 19 facing each other and receiving a conduit 20 for a heating or cooling agent.

The free space 21 inside the upper profile 14 can be utilized for e. g. wire laying of electric wires. The lower profile has an inner space 22, which makes the flow channel for the intake air which is introduced into the baffle through a connection pipe 13. The air is heated or cooled respectively on its way through the channel 22 and passes out at 23 at the opposite end of the baffle 11 by way of an air regulating means 24, which consists of two hollow cylinders outside each other and rotatable relative to each other. The air is then forced to turn 180° by a cover 25 arranged at some distance from the outlet end of the baffle 11 and the side edges 26 of which overlapping the end portion of the baffle. The cover 25 has a somewhat larger dimension as compared to the cross section size of the baffle 11, so that air can pass between the side edges 26 of the cover and the outside of the baffle, as is shown in figure 2. The air will thus stroke along the outside of the baffle 11 along at least a part of its length, at which it is further heated or cooled respectively before it is distributed in the room.

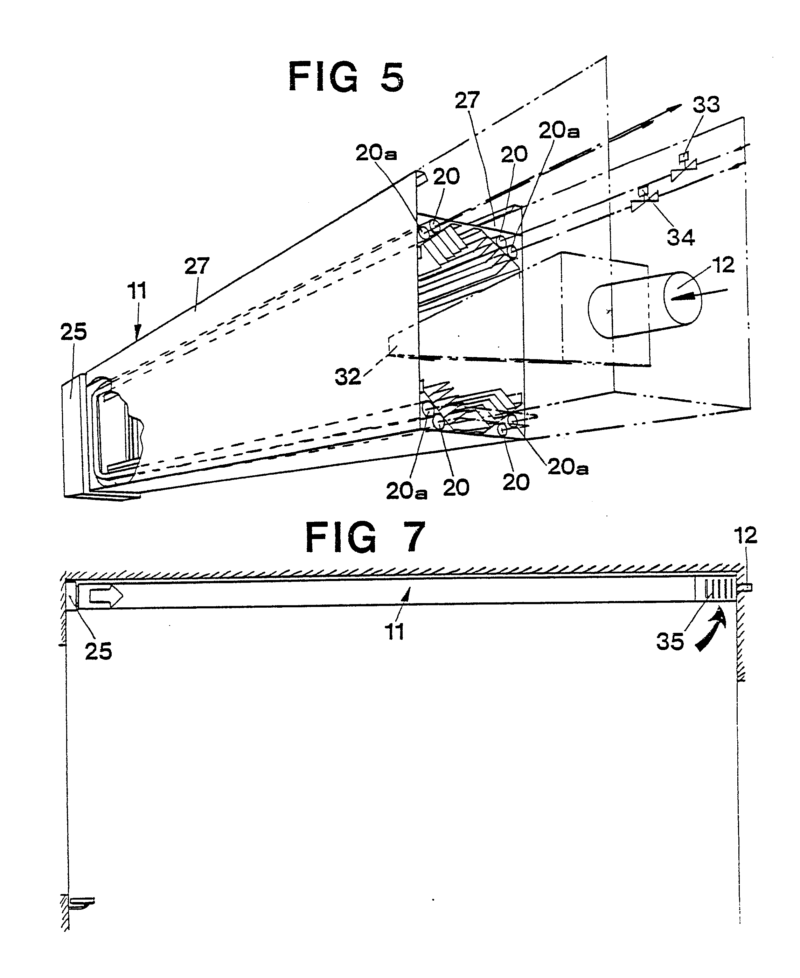

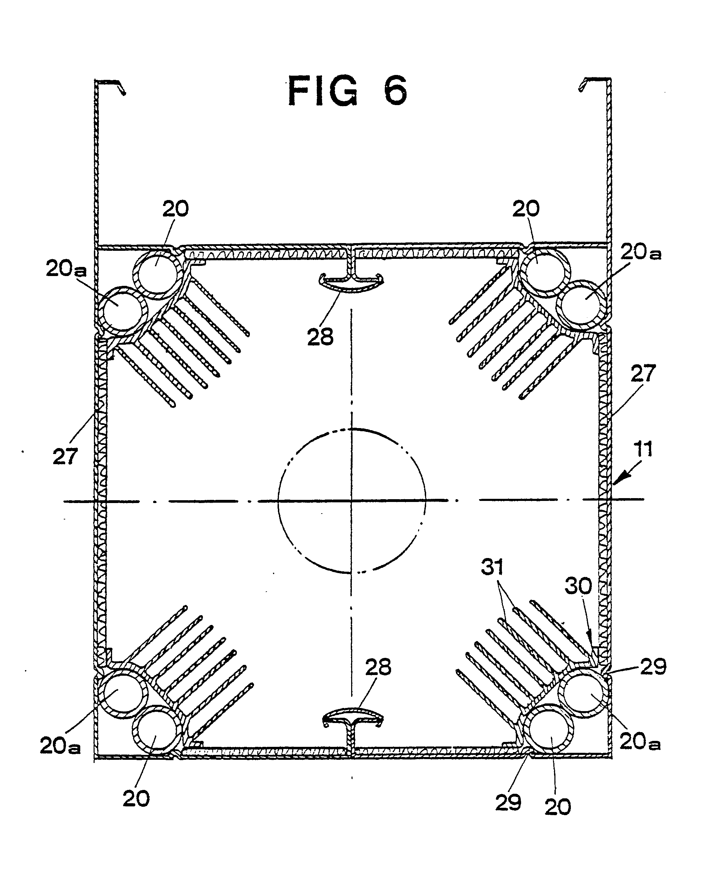

In the embodiment shown in figure 5-7 the baffle 11 is composed by a pair of metal profiles 27 having a substantially U-shaped cross section and which are fixed towards each other by means of a pair of connecting rails 28 to a box-shaped configuration. Conduits for a heating agent and a cooling agent 20 resp. 20a extend in loops backwards or forwards through the baffle 11 at the corner thereof as is indicated in figure 5. The conduits 20 and 20a are fixed to the corner of the baffle by means of grooves 29 in the profiles 27 and convection profiles 30 provided with heating and cooling flanges 31 respectively.

The primary air is blown into the rear and of the baffel by means of an induction nozzle 32 at which room air is induced through a grating 35 at the rear end of the baffle and which together with the primary air is tempered within the baffel and blown out at the front end of the baffel (the outer wall end).

The device is adapted for rooms e. g. offices, where both excess and deficit of heat occur. During the morning there is a heat requirement at which the heat valve 33 is open. When the ventilation is started the heat requirement is increased since also the primary air has to be heated to room temperature. In the middle of the morning the heat requirement passes into a heat excess through the internal heat contribution, at which the heat valve 33 is closed and the cooling agent valve 34 is opened. After working hours the heat excess passes into a heat requirement again.

The upper side of the baffle 11 is preferably designed as a table recess for receiving electrical, tele- and terminal cables. The baffle 10 constitutes a primary suspension system for armatures, sound-absorbents etc.

## Claims

1. A heating- or cooling device of the kind comprising a long box-shaped element (11) of a heat conducting material and which is intended to be suspended from a ceiling of a room and a heating- and/or cooling element (20), e. g. one or more conduits for a heating- and/or cooling agent, and which extends through said box-shaped element (11) in a heat conducting contact with this, and where an inlet (13) for intake air to the room is arranged at one end of the box-shaped member (11) and at its opposite end there is arranged an outlet (23) for the air, which thus is forced to pass through said element for being heated or cooled, characterized in, that at the outlet end of said element (11) at some distance therefrom there is arranged a cover (25) with somewhat larger dimension than the outer dimension of the element and the side edges (26) thereof overlapping the end portion of the element, said cover forcing the air leaving the element to turn back substantially 180°C and stroke along the outside of the element for further heating or cooling before it is distributed in the room.

2. A device according to claim 1, characterized in, that an air regulating means (24) is arranged in connection to said outlet (23).

3. A device according to claim 1 or 2, characterized in, that said inlet (13) is designed as an induction nozzle (32) intended to induce room air to the element (11) together with the intake air.

4. A device according to any of the preceding claims, characterized in, that conduit(s) (20, 20a) are arranged to extend backwards and forwards at least once through the box-shaped member (11).

5. A device according to claim 4, characterized in, that the conduit(s) (20, 20a) is/are arranged at the corner portions of said box-shaped member (11).

6. A device according to claim 5, characterized in, that the conduit(s) (20, 20a) is/are in heat conducting contact with convection profiles (30) having heating- and cooling flanges (31) respectively.

## Patentansprüche

1. Heiz- oder Kühlvorrichtung mit einem langen kastenförmigen Element (11) aus wärmeleitendem Material, welches von der Decke eines Raumes abgehängt ist, und mit einen Heiz- und/ oder Kühlelement (20), z. B. einer oder mehreren Leitungen für ein Heiz- und/oder Kühlmittel, das durch das kastenförmige Element (11) verläuft und mit diesem in wärmeleitender Berührung steht, wobei an einem Ende des kastenförmigen Elementes (11) ein Lufteinlaß (13) und am gegenüberliegenden Ende ein Luftauslaß (23) vorgesehen sind, wobei die Luft zur Erwärmung oder Kühlung durch dieses Element geleitet wird, dadurch gekennzeichnet, daß an der Auslaßseite dieses Elementes (11) in einem Abstand hievon ein Deckel (25) mit etwas größeren Abmessungen als die Außenabmessungen des Elementes angeordnet ist, dessen Ränder (26) den Endabschnitt des Elementes überlappen und der die aus dem Element austretende Luft um im wesentlichen 180° umlenkt und zur Außenseite des Elementes zur weiteren Erwärmung oder Kühlung leitet, bevor sie in den Raum verteilt wird.

2. Vorrichtung nach Anspruch 1, dadurch gekennzeichnet, daß am Luftauslaß (23) eine Luftregeleinrichtung (24) angeordnet ist.

3. Vorrichtung nach Anspruch 1 oder 2, dadurch gekennzeichnet, daß der Lufteinlaß (13) als Einlaufdüse (32) ausgebildet ist, durch die Raumluft zusammen mit Zuluft in das Element (11) geleitet wird.

4. Vorrichtung nach den Ansprüchen 1 bis 3, dadurch gekennzeichnet daß eine oder mehrere Leitungen (20, 20a) vorgesehen sind, die zumindest ein Mal durch das kastenförmige Element (11) rückwärts und vorwärts verlaufen.

5. Vorrichtung nach Anspruch 4, dadurch gekennzeichnet, daß die Leitung(en) (20, 20a) in den Eckbereichen des kastenförmigen Elementes (11) angeordnet ist (sind).

6. Vorrichtung nach Anspruch 5, dadurch gekennzeichnet, daß die Leitung(en) (20, 20a) mit Heiz- bzw. Kühlrippen (31) aufweisenden Konvektionsprofilen (30) in wärmeleitender Berührung steht (stehen).

**Revendications**

1. Un dispositif de chauffage ou de refroidissement du type comportant un élément (11) en forme de caisson en longueur réalisé en un matériau conducteur de la chaleur et qui est destiné à être suspendu au plafond d'une pièce et un élément (20) de chauffage et/ou de refroidissement, par exemple, une ou plusieurs conduites pour un agent de chauffage et/ou de refroidissement, et qui s'étend à travers ledit élément (11) en forme de caisson en étant en contact de conduction de chaleur avec celui-ci, dans lequel une entrée (13) pour l'air entrant dans la pièce est disposée à une extrémité de l'élément (11) en forme de caisson et, à son extrémité opposée, est ménagée une sortie (23) pour l'air, qui est ainsi forcée de passer à travers ledit élément pour être chauffé ou refroidi, caractérisé en ce qu'à l'extrémité de sortie dudit élément (11) à une certaine distance de celui-ci, est monté un couvercle (25) dont la dimension est légèrement plus grande que la dimension externe de l'élément et dont les bords latéraux (26) recouvrent la partie d'extrémité de l'élément, ledit couvercle forçant l'air quittant l'élément à revenir pratiquement à 180° et à frapper sur le côté extérieur de l'élément pour un chauffage ou un refroidissement supplémentaire avant d'être distribué dans la pièce.

2. Un dispositif selon la revendication 1 caractérisé en ce que des moyens de réglage de l'air (24) sont prévus en relation avec ladite sortie (23).

3. Un dispositif selon la revendication 1 ou 2, caractérisé en ce que ladite entrée (13) est conformée comme une buse d'admission (32) destiné à amener l'air ambiant à l'élément (11) conjointement avec l'air entrant.

4. Un dispositif selon l'une quelconque des revendications précédentes, caractérisé en ce que, les conduite(s) (20, 20a) sont agencées pour se prolonger vers l'arrière et vers l'avant au moins une fois à travers l'élément en forme de caisson (11).

5. Un dispositif selon la revendication 4, caractérisé en ce que la ou le(s) conduite(s) (20, 20a) est (sont) disposée(s) aux angles dudit élément en forme de caisson (11).

6. Un dispositif selon la revendication 5, caractérisé en ce que la ou le(s) conduite(s) (20, 20a) est (sont) en contact de conduction de chaleur avec les profilés de convection (30) comportant respectivement des ailettes (31) de chauffage et de refroidissement.

*FIG.1*

*FIG.2*

## FIG.3

## FIG.4

2

# FIG 5

# FIG 7

# FIG 6